# FASCICULE DE BREVET EUROPEEN

(11) **EP 1 856 406 B1**
(45) Date de publication et mention de la délivrance du brevet: **17.11.2010**
(21) Numéro de dépôt: 06709514.1
(22) Date de dépôt: 14.02.2006
(51) Int. Cl.: F03B 17/06

(54) **DISPOSITIF DE MAINTIEN D'UNE TURBOMACHINE HYDRAULIQUE**
VORRICHTUNG ZUR INSTANDHALTUNG EINER HYDRAULISCHEN TURBOMASCHINE
DEVICE FOR MAINTAINING A HYDRAULIC TURBOMACHINE

(30) Priorité: 14.02.2005 FR 0550420
(43) Date de publication de la demande: 21.11.2007
(73) Titulaire: Institut Polytechnique de Grenoble, 38031 Grenoble Cedex (FR); ELECTRICITE DE FRANCE, 75382 Paris Cedex 08 (FR)
(72) Inventeur: ACHARD, Jean-Luc, F-38100 Grenoble (FR); IMBAULT, Didier, F-38240 Meylan (FR); MAITRE, Thierry, F-38330 SAINT ISMIER (FR)
(74) Mandataire: de Beaumont, Michel
(86) Numéro de dépôt international: PCT/FR2006/050135
(87) Numéro de publication internationale: WO 2006/085042

(56) Documents cités:
- WO-A-01/92720
- WO-A-2005/010353
- WO-A-2005/075819
- DE-A1- 3 639 989
- FR-A- 2 821 647
- GB-A- 118 899
- US-A- 1 782 277
- US-A- 4 134 707
- US-A1- 2001 001 299
- US-A1- 2002 197 148

## Description

### Domaine de l'invention

La présente invention concerne un dispositif de maintien d'une turbomachine hydraulique, en particulier une turbomachine hydraulique pour la fourniture d'électricité par récupération de l'énergie de courants marins ou fluviaux, comme défini dans le préambule de la revendication 1. Un tel dispositif est connu par exemple du document US-A-4 134 707

### Exposé de l'art antérieur

Parmi les sources d'énergie naturelles non polluantes, une source d'énergie actuellement peu exploitée correspond aux courants d'eau naturellement présents sur la planète : courants de pleine mer, courants de marée, courants de détroit et d'estuaire, courants de fleuve ou de rivière. En effet, si les installations hydroélectriques fournissant de l'énergie électrique à partir de l'énergie potentielle contenue dans une retenue d'eau (par exemple des barrages sur des fleuves ou des rivières) sont largement répandues, les dispositifs fournissant de l'énergie électrique directement à partir de l'énergie cinétique de courants marins ou fluviaux sont généralement encore actuellement au stade de projets et correspondent le plus souvent à des turbomachines hydrauliques à axe horizontal.

Même si les sites qui pourraient être utilisés pour la fourniture d'énergie électrique à partir de courants marins ou fluviaux correspondent généralement à des courants à faibles vitesses, de 0,5 m/s à 6 m/s, la taille des sites et le grand nombre de sites potentiels rendent une telle source d'énergie particulièrement intéressante. En effet, de la rivière jusqu'au grand courant océanique, les surfaces exploitables traversées par un courant varient typiquement de 100 m² à 100 km², ce qui correspond, pour une vitesse de 2 m/s, à des puissances théoriquement récupérables respectivement de 400 kilowatts à 400 gigawatts.

La publication "Helical Turbines for the Gulf Stream: Conceptual Approach to Design of a Large-Scale Floating Power Farm" de Gorlov (Marine Technology, vol. 35, n° 3, Juillet 1998, pages 175-182) décrit un dispositif de fourniture d'électricité comprenant un groupe de colonnes disposées dans un courant marin et reliées les unes aux autres par un système de barres de renforcement. Chaque colonne se compose d'un empilement de turbines élémentaires, appelées par la suite module turbine, selon un axe vertical. Un avantage d'une telle turbomachine est que le fonctionnement des modules turbine est indépendant de l'orientation du courant, des variations d'orientation du courant pouvant se rencontrer par exemple dans le cas des courants marins. Un module turbine se compose de deux flasques parallèles entre lesquelles sont disposées au moins deux pales correspondant chacune à une portion d'hélicoïde, les extrémités des pales étant reliées à l'une des flasques. Dans la colonne, les flasques de deux modules turbine adjacents sont solidaires. Lorsqu'il est traversé par un courant, chaque module turbine fournit un couple d'entraînement à la colonne qui, à son tour, entraîne un générateur électrique.

Une telle structure présente plusieurs inconvénients. Dans un module turbine, le couple d'entraînement est fourni par la liaison entre les pales et les flasques associées, et, dans une colonne, le couple d'entraînement du générateur électrique est transmis de proche en proche entre chaque module turbine par les liaisons entre les flasques de modules turbine adjacents. De ce fait, une rupture d'une pale d'un seul module turbine peut entraîner la mise hors d'usage de la colonne turbine. En outre, les pales d'un module turbine reçoivent un couple de torsion transmis par les modules turbine sous-jacents de la colonne. Les pales des modules turbine proches du générateur électrique sont donc les plus sollicitées. Pour éviter la rupture des pales les plus sollicitées, on peut prévoir des modules turbine plus ou moins résistants selon leur position dans la colonne par rapport au générateur électrique. Toutefois, ceci complique la conception et la fabrication de la colonne. Si l'on souhaite conserver des modules turbine identiques, il est nécessaire que chaque module turbine puisse résister au couple de torsion maximum, ce qui en pratique consiste à prévoir des pales suffisamment épaisses. Dans ce cas, les modules turbine éloignés du générateur sont surdimensionnés en épaisseur par rapport au couple de torsion qu'ils reçoivent réellement, ce qui dégrade les performances hydrodynamiques de la colonne.

En outre, le groupe de colonnes décrit dans la publication de Gorlov est complètement immergé et ancré au fond marin. Ce groupe de colonnes réunit beaucoup de colonnes reliées entre elles par un réseau de très nombreuses barres. Le coût d'installation d'un tel groupe de colonnes est très élevé. De plus, les opérations de maintenance du groupe de colonnes doivent donc être réalisées par des plongeurs. Il en est de même des opérations de modification d'un groupe de colonnes déjà installé correspondant, par exemple, au retrait ou à l'ajout de colonnes. Il s'agit donc d'opérations relativement coûteuses, techniquement difficiles et entraînant une prise de risque importante pour les plongeurs du fait du courant marin présent au niveau des colonnes.

Le document WO 2005/075819 au nom de la demanderesse décrit une turbomachine hydraulique comportant un arbre d'entraînement le long duquel sont réparties des turbines. Chaque turbine comprend des pales motrices réparties autour de l'arbre d'entraînement, chaque pale motrice ayant la forme d'une aile volante en "V" à extrémité libre dont la partie centrale est reliée à l'arbre d'entraînement par un bras, d'où il résulte que les pales d'une turbine ne reçoivent pas de couple de torsion des turbines adjacentes.

Dans la demande de brevet français précédemment citée, des exemples de dispositifs sont décrits pour assurer le maintien ou la rigidification de la turbomachine. A titre d'exemple, le maintien et la rigidification peuvent être obtenues par une mise sous tension de l'arbre d'entraînement de la turbomachine selon son axe en appliquant deux forces axiales de sens opposé aux extrémités de l'arbre d'entraînement ou aux extrémités d'un câble traversant l'arbre d'entraînement selon son axe. Pour ce faire, l'extrémité supérieure de la turbomachine peut être maintenue par un système de barges flottantes ou de flotteurs et l'extrémité inférieure de la turbomachine peut être lestée, ancrée au sol ou fixée au niveau d'une base elle-même ancrée au sol.

Toutefois, les forces de tension nécessaires à une rigidification efficace de l'arbre d'entraînement de la turbomachine croissent très rapidement avec la longueur de l'arbre d'entraînement. Les barges maintenant l'extrémité supérieure de la turbomachine doivent alors assurer une portance très importante, ce qui impose la réalisation de barges de très grandes dimensions. En outre, des contraintes mécaniques pouvant être excessives peuvent se développer au niveau de l'arbre d'entraînement de la turbomachine et des dispositifs de maintien des extrémités de la turbomachine. Il est, en conséquence, difficile d'éviter une forte courbure de l'arbre d'entraînement préjudiciable à une rotation convenable de l'axe d'entraînement de la turbomachine dans le courant marin ou fluvial.

Par ailleurs, l'utilisation de barges assurant le maintien de l'extrémité supérieure de la turbomachine peut être incompatible avec la circulation de bateaux, en particulier dans le cas où la turbomachine est disposée dans le lit d'un fleuve, ou en présence d'une houle importante. En effet, dans ce dernier cas, le système d'ancrage de la barge au fond marin, au lit d'un fleuve, ou à une berge, etc. peut être sollicité de façon excessive et des oscillations verticales de la barge peuvent entraîner des interactions difficiles à maîtriser entre la barge et la turbomachine.

L'utilisation des moyens adaptés à diriger l'écoulement du liquide vers les turbomachines immergées dans un liquide de mouvement est connue en général du document GB-A-118 899.

### Résume de l'invention

La présente invention vise un dispositif de maintien d'une turbomachine qui ne nécessite pas obligatoirement l'application de forces selon l'axe de l'arbre d'entraînement de la turbomachine.

La présente invention vise un dispositif de maintien d'une turbomachine facilitant le montage, le démontage et la maintenance de la turbomachine.

Pour atteindre ces objets, la présente invention prévoit un dispositif de maintien d'une turbomachine hydraulique tel que revendiqué en revendication 1.

Des modes de réalisation de la présente invention sont revendiqués dans les revendications dépendantes.

### Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :
la figure 1 représente un exemple de réalisation d'une turbine ;
la figure 2 représente un exemple de réalisation d'une turbomachine constituée de l'empilement de cinq turbines représentées en figure 1 ;
la figure 3 est une vue de face d'un premier exemple de réalisation d'un élément de dispositif de maintien selon l'invention ;
la figure 4 est une vue en perspective d'un deuxième exemple de réalisation d'un élément de dispositif de maintien selon l'invention ;
les figures 5A et 5B sont respectivement une vue de dessus et une vue en perspective d'un troisième exemple de réalisation d'un élément de dispositif de maintien selon l'invention ;
la figure 6 est une vue en perspective d'un quatrième exemple de réalisation d'un élément de dispositif de maintien selon l'invention ;
la figure 7 est une vue en perspective d'un cinquième exemple de réalisation d'un élément de dispositif de maintien selon l'invention :
la figure 8 est une vue en perspective d'un sixième exemple de réalisation d'un élément de dispositif de maintien selon l'invention ;
les figures 9A et 9B sont respectivement une vue en perspective et une vue de détail d'un septième exemple de réalisation d'un élément de dispositif de maintien selon l'invention ;
la figure 10 est une vue en perspective d'un huitième exemple de réalisation d'un élément de dispositif de maintien selon l'invention ;
les figures 11A, 11B et 11C sont respectivement une vue en perspective et deux vues de détail d'un neuvième exemple de réalisation d'un élément de dispositif de maintien selon l'invention ;
la figure 12 est une vue en perspective d'un dixième exemple de réalisation d'un élément de dispositif de maintien selon l'invention ;
les figures 13 et 14 sont des exemples de dispositifs de maintien d'une turbomachine réalisés respectivement avec les éléments de dispositif de maintien selon les troisième et neuvième exemples de réalisation ;
les figures 15 à 18 représentent des exemples de systèmes de fixation du dispositif de maintien selon l'invention ;
la figure 19 est un onzième exemple de réalisation d'un élément de dispositif de maintien selon l'invention ;
les figures 20A et 20B sont une vue en perspective et une vue de dessus d'un douzième exemple de réalisation d'un élément de dispositif de maintien selon l'invention ;
la figure 21 est une vue en perspective d'un treizième exemple de réalisation d'un élément de dispositif de maintien selon l'invention ;
la figure 22 est une vue en perspective d'un quatorzième exemple de réalisation d'un élément de dispositif de maintien selon l'invention ;
la figure 23 est une variante de l'élément de dispositif de maintien de la figure 9 ;
les figures 24 et 25 représentent des exemples de dispositifs de maintien d'une turbomachine réalisés avec les éléments de dispositif de maintien selon les treizième et quatorzième exemples de réalisation ;
la figure 26 représente une variante du dispositif de maintien de la figure 24 ; et
la figure 27 est une vue en perspective d'un quinzième exemple de réalisation de deux éléments de dispositif de maintien selon l'invention.

### Description détaillée

Par souci de clarté, de mêmes éléments ont été désignés par de mêmes références aux différentes figures. Dans le reste de la description, on appelle module turbine, une turbine élémentaire constituant une turbomachine et on appelle colonne turbine une turbomachine constituée de l'empilement de plusieurs modules turbine. De plus, on appelle module structure un élément de dispositif de maintien selon l'invention destiné au maintien d'un module turbine et on appelle tour ou tour de maintien un dispositif de maintien constitué de l'empilement de plusieurs modules structure et destiné au maintien d'une turbomachine.

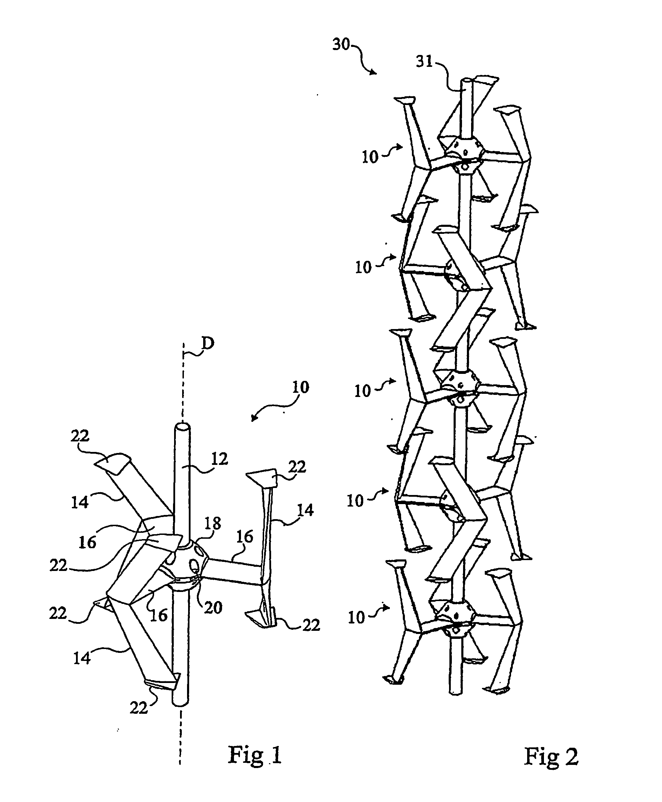

La figure 1 illustre un exemple de réalisation d'un module turbine 10 à partir duquel peut être réalisée une colonne turbine. Le module turbine 10 comprend une portion d'arbre d'entraînement 12 d'axe D adaptée à être entraînée en rotation autour de l'axe D par l'intermédiaire de pales motrices 14 réparties autour de la portion d'arbre d'entraînement 12. Chaque pale motrice 14 est reliée à la portion d'arbre d'entraînement 12 par l'intermédiaire d'un bras rigide 16 sensiblement perpendiculaire à l'axe D et fixé à un moyeu 18 solidaire de la portion d'arbre d'entraînement 12. Chaque pale motrice 14 a une forme générale d'aile volante en "V" orientée de façon que l'envergure de l'aile, variant environ de 1 à 10 mètres, se mesure selon l'axe D et ayant une section, selon un plan perpendiculaire à l'axe D, en forme de profil d'aile dont le squelette correspond à une portion d'un cercle, variant environ de 1 à 10 mètres de diamètre, dont le centre est sur l'axe D. Toutefois, des pales motrices à profil symétrique peuvent être utilisées. A titre d'exemple, le profil d'une pale motrice est un profil d'aile de la famille Naca ou Eppler. Chaque pale motrice 14 est reliée au niveau de sa portion centrale au bras rigide 16 associé. La fixation des bras rigides 16 au moyeu 18 est assurée, par exemple, par l'intermédiaire de vis 20. Une ailette d'extrémité 22 (winglet) est prévue au niveau des bords marginaux de chaque pale motrice 14 pour limiter les pertes de performances hydrodynamiques dues aux effets de bout d'aile. Les ailettes d'extrémité 22 sont globalement orientées selon un plan moyen perpendiculaire à l'axe D ou peuvent avoir un faible angle de calage par rapport à un tel plan moyen. Les ailettes d'extrémité 22 peuvent s'étendre de part et d'autre des bords marginaux de chaque pale motrice ou seulement d'un seul côté des bords marginaux de chaque pale motrice. En outre, les bords marginaux des ailettes d'extrémité peuvent être incurvés selon des cercles concentriques. De plus, les ailettes d'extrémité 22 peuvent être également des ailes Delta symétriques ou non.

Les courants dans lesquels le module turbine 10 est destiné à fonctionner sont généralement inférieurs à une dizaine de mètres par seconde. Les vitesses de rotation du module turbine 10 sont donc relativement faibles (typiquement inférieures à 300 tours par minute pour un module turbine 10 dans lequel les pales motrices 14 sont situées à environ 1 mètre de la portion d'arbre d'entraînement 12). Ceci permet d'utiliser avantageusement des pales motrices 14 en forme d'aile volante en "V" qui ne pourraient être utilisées à des vitesses de rotation élevées en raison des forces centrifuges. Les pales motrices 14 sont en forme d'aile symétriques ou légèrement dissymétriques, ce qui permet de limiter, en fonctionnement, le développement d'un couple de torsion au niveau du bras 16 reliant la pale motrice 14 à la portion d'arbre d'entraînement 12.

Lorsque le module turbine 10 est placé dans un courant ayant une direction perpendiculaire à l'axe D, les pales motrices 14 entraînent la portion d'arbre 12 en rotation autour de l'axe D. Dans la suite de la description, on considérera sans indication contraire que le courant marin ou fluvial a une direction sensiblement perpendiculaire à l'axe D. Toutefois, il est clair que lorsque le courant a une direction inclinée par rapport à l'axe D de moins de 90 degrés, les pales motrices 14 entraînent toujours la portion d'arbre d'entraînement 12 en rotation mais avec un rendement qui décroît lorsque la direction de l'écoulement s'éloigne de la perpendiculaire à l'axe D.

Pour un courant constant et pour une vitesse de rotation donnée, le couple d'entraînement fourni par les pales motrices 14 d'un module turbine 10 dépend principalement de la surface alaire d'une pale motrice 14 et du nombre de pales motrices 14. De ce fait, pour que deux modules turbine ayant un nombre différent de pales motrices 14 fournissent un même couple d'entraînement, les pales motrices 14 du module turbine 10 ayant le nombre le moins élevé de pales motrices 14 doivent avoir une épaisseur et une corde plus importantes que les pales motrices 14 du module turbine 10 ayant le nombre de pales motrices 14 le plus élevé. De telles pales motrices 14 sont donc mécaniquement plus résistantes et sont bien adaptées à des courants forts, par exemple de l'ordre de 6 m/s. Inversement, les pales motrices 14 d'un module turbine ayant un nombre élevé de pales peuvent avoir une épaisseur et une corde réduites par rapport aux pales d'un module turbine ayant un nombre de pales moins élevé. Ceci permet alors de réduire le nombre de Reynolds associé à l'écoulement autour de chaque pale motrice 14 et donc de favoriser la formation d'un écoulement laminaire pour améliorer les performances du module turbine. Une telle configuration est donc bien adaptée aux courants faibles.

La figure 2 représente schématiquement un exemple de réalisation partiel d'une colonne turbine 30 constituée d'un empilement de cinq modules turbine 10 de la figure 1 décrit plus en détail dans la demande de brevet 04/50209 précédemment mentionnée. L'arbre d'entraînement 31 de la colonne turbine 30 est formé par l'ensemble des portions d'arbre d'entraînement 12 des modules turbine 10 qui sont rendus solidaires. L'arbre d'entraînement 31 assure la transmission des couples d'entraînement fournis par chaque module turbine 10. La colonne turbine 30 entraîne un générateur électrique (non représenté) au niveau de l'une des portions de l'arbre d'entraînement 31. Les pales motrices 14 d'un module turbine 10 sont seulement reliées à la portion d'arbre d'entraînement 12 et ne sont pas directement reliées à leurs extrémités aux pales motrices 14 des modules turbine 10 adjacents. Le couple d'entraînement fourni par l'arbre d'entraînement 31 est donc transmis seulement par les portions d'arbre d'entraînement 12 et les pales motrices 14 ne reçoivent pas de couples de torsion indésirables des modules turbine 10 adjacents.

Comme cela est représenté en figure 2, chaque module turbine 10 est décalé angulairement autour de l'axe D par rapport à un module turbine adjacent. Ceci permet d'obtenir un couple d'entraînement, au niveau de l'extrémité de l'arbre d'entraînement 31 de la colonne turbine 30 reliée au générateur électrique, qui est sensiblement uniforme tout au long d'une rotation de 360° de la colonne turbine 30. Ce décalage est, par exemple, de 360/(P*N) degrés pour une colonne turbine 30 ayant un empilement de N modules turbine 10, chaque module turbine 10 ayant P pales motrices 14. En outre, de tels décalages permettent d'obtenir une structure dissymétrique qui facilite la mise en rotation de la colonne turbine 30 à partir d'une position d'arrêt.

En fonctionnement, il résulte de l'écoulement liquide autour d'un module turbine 10 une force de portance dont la direction est perpendiculaire à l'axe D et perpendiculaire à la direction de l'écoulement et dont le sens exact dépend du sens de rotation du module turbine 10. La force de portance se surajoute à la force de traînée qui est systématiquement présente. L'arbre d'entraînement 31 subit donc une force globale de portance non nulle, correspondant à la somme des forces de portance associées à chaque module turbine 10. Ceci peut ne pas être souhaitable pour certaines applications. Pour pallier un tel inconvénient, certains modules turbine 10 sont reliés à l'arbre d'entraînement 31 chacun par l'intermédiaire d'un système d'inversion de couple permettant au module turbine 10 de tourner autour de l'axe D selon le sens opposé au sens de rotation de l'arbre d'entraînement 31. Les modules turbine 10 peuvent être répartis sur la colonne turbine 30 de façon que deux modules turbine 10 adjacents tournent dans un sens opposé. Plus généralement, la colonne turbine 30 peut être constituée d'une succession de groupes de modules turbine 10 adjacents comportant chacun un nombre réduit de modules turbine 10 adjacents. Tous les modules turbine 10 d'un même groupe tournent alors dans le même sens et les modules turbine 10 de deux groupes successifs tournent dans des sens opposés. Les structures précédemment décrites sont avantageuses dans la mesure où la force de portance totale appliquée à la colonne turbine 30, correspondant à la somme des forces de portance associées à chaque module turbine 10, peut alors être sensiblement réduite voire annulée.

Pour chaque module turbine 10, on peut prévoir, entre le moyeu 18 et la portion d'arbre d'entraînement 12 associée, une boîte d'engrenages ou tout autre système de variation de vitesse permettant de modifier le rapport entre la vitesse de rotation de la portion d'arbre d'entraînement 12 et la vitesse de rotation des pales motrices 14. Le rapport de vitesses peut être modifié en fonction du débit du courant qui atteint le module turbine 10 considéré. Ceci est avantageux étant donné que, suivant les sites, le débit du courant marin ou fluvial peut varier à la fois dans le temps et/ou selon le module turbine 10 considéré le long de l'axe de rotation D. Or, pour un module turbine 10 donné, la puissance maximale délivrée est obtenue pour une vitesse de rotation des pales motrices 14 qui dépend du débit du courant qui atteint le module turbine 10. La mise en place d'un tel système de variation de vitesses au niveau de chaque module turbine 10 permet de faire fonctionner chaque module turbine 10 d'une colonne 30 de façon qu'il fournisse une puissance maximale. Selon une variante, le système de variation de vitesse peut être associé, non pas à un module turbine 10, mais à un groupe de modules turbine adjacents. Selon une autre variante, pour une colonne 30 constituée de modules turbine 10 dont les pales motrices 14 sont solidaires de l'arbre d'entraînement 12, on prévoit un seul système de variation de vitesse pour commander dans le temps la vitesse de rotation de l'arbre d'entraînement 12, identique dans ce cas à la vitesse de rotation de l'ensemble des pales motrices. De façon générale, l'arbre d'entraînement 12 est relié à l'arbre d'entrée d'une génératrice. Le système de variation de vitesse est alors disposé entre l'arbre d'entraînement 12 et l'arbre d'entrée de la génératrice et est adapté à modifier le rapport entre la vitesse de rotation de l'arbre d'entraînement et la vitesse de rotation de l'arbre d'entrée de la génératrice de façon que la colonne 30 fournisse une puissance maximale. A titre d'exemple, la liaison entre l'arbre d'entraînement 12 et l'arbre d'entrée de la génératrice peut être réalisé au niveau de l'extrémité supérieure, de l'extrémité inférieure ou au niveau d'un point quelconque le long de l'axe de l'arbre d'entraînement 12 par l'intermédiaire d'un système de renvoi. Le système de variation de vitesse peut alors, selon le cas, être disposé au niveau de l'extrémité supérieure ou inférieure de l'arbre d'entraînement, ou au niveau d'un point quelconque le long de l'axe de l'arbre d'entraînement 12. La commande du rapport de vitesses fixé par le système de variation de vitesse peut être réalisée en fonction d'une mesure de la vitesse amont du courant marin ou fluvial qui atteint la colonne 30 ou directement à partir d'une analyse de la puissance fournie par la colonne 30. Selon une autre variante, la génératrice fournit un couple de freinage qui s'oppose à la rotation de la colonne 30 et dont l'amplitude peut être commandée pour que la vitesse de rotation de la colonne 30 corresponde à la vitesse de fourniture de la puissance maximale.

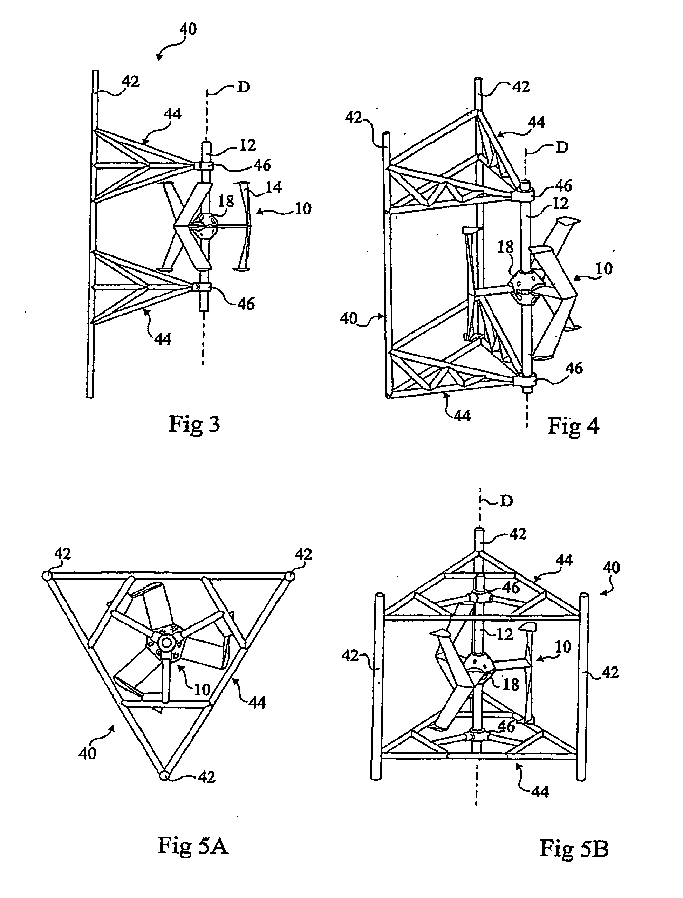

La figure 3 représente un premier exemple de réalisation d'un module structure 40 assurant le maintien d'un module turbine 10. Le module structure 40 comprend un montant 42 orienté selon l'axe D et des moyens de liaison 44 reliant le montant 42 à des paliers 46 disposés de part et d'autre du moyeu 18 du module turbine 10 et dans lesquels la portion d'arbre d'entraînement 12 du module turbine 10 est montée à rotation. La direction D correspondant généralement à la verticale, on qualifiera par la suite le montant 42 de montant vertical. Le montant vertical 42 peut être une poutre creuse de section circulaire ou en forme de profil d'aile. Les moyens de liaison 44 s'étendent globalement selon une direction perpendiculaire à l'axe D, et comprennent, dans le présent exemple de réalisation, un ensemble de poutres disposées en treillis.

La figure 4 représente un deuxième exemple de réalisation dans lequel le module structure 40 comprend deux montants verticaux 42 reliés par des moyens de liaison 44 à deux paliers 46 recevant la portion d'arbre d'entraînement 12 du module turbine 10 de part et d'autre du moyeu 18. Les moyens de liaison 44 sont constitués de poutres disposées en treillis et comprennent des poutres 48 qui relient les montants verticaux 42 l'un à l'autre de façon à rigidifier le module structure 40.

Pour les premier et deuxième exemples de réalisation, les modules structure 44 sont avantageusement disposés en fonctionnement dans le courant marin ou fluvial en aval du module turbine 10 selon la direction d'écoulement du courant. Ils permettent donc de positionner le module turbine 10 associé dans une région amont sans occulter le courant.

Les figures 5A et 5B représentent un troisième exemple de réalisation dans lequel le module structure 40 comprend trois montants verticaux 42 disposés, vus de dessus, aux sommets d'un triangle, par exemple, un triangle équilatéral. Les montants verticaux 42 sont reliés par des moyens de liaison 44 à deux paliers 46 recevant la portion d'arbre d'entraînement 12 du module turbine 10 de part et d'autre du moyeu 18. Les moyens de liaison 44 sont composés de poutres disposées en treillis qui relient également les montants 42 les uns aux autres de façon à rigidifier le module structure 40.

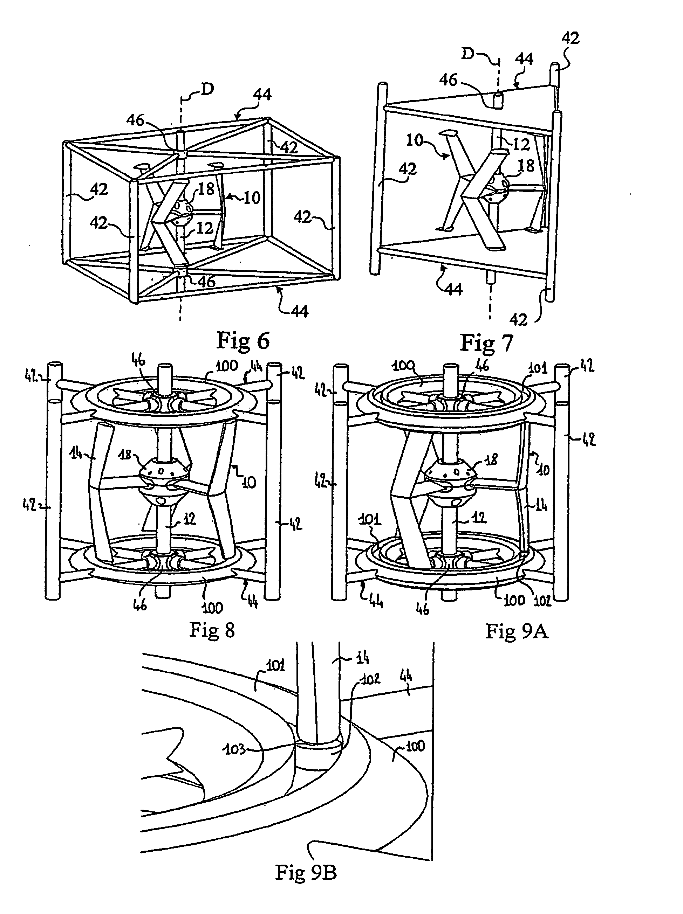

La figure 6 représente un quatrième exemple de réalisation dans lequel le module structure 40 comprend quatre montants verticaux 42 disposés, vus de dessus, aux sommets d'un rectangle. Les montants verticaux 42 sont reliés par des moyens de liaison 44 à deux paliers 46 recevant la portion d'arbre d'entraînement 12 du module turbine 10 de part et d'autre du moyeu 18. Les moyens de liaison 44 sont composés de poutres disposées en treillis qui relient également les montants 42 les uns aux autres de façon à rigidifier le module structure 40.

La figure 7 représente un cinquième exemple de réalisation dans lequel le module structure 40 comprend trois montants verticaux 42 disposés, vus de dessus, aux sommets d'un triangle, par exemple, un triangle équilatéral. Les montants verticaux 42 sont reliés par des moyens de liaison 44 à deux paliers 46 recevant la portion d'arbre d'entraînement 12 du module turbine 10 de part et d'autre du moyeu 18. Les moyens de liaison 44 sont composés de deux plaques disposées de part et d'autre du module turbine 10 dans un plan sensiblement perpendiculaire à l'axe D et reliant chacune les trois montants verticaux 42 à l'un des paliers 46.

Pour les exemples de réalisation représentés aux figures 5A, 5B, 6 et 7, certains montants verticaux 42 sont disposés dans le courant marin ou fluvial en amont du module turbine 10 selon la direction d'écoulement du courant. Les montants verticaux 42 en amont du module turbine sont disposés par rapport au module turbine 10 et l'un par rapport à l'autre de façon à limiter au minimum l'occultation du courant. Dans les trois derniers exemples de réalisation, il est possible de fixer un grillage au niveau des montants verticaux 42 situés en amont du module turbine 10 pour protéger le module turbine 10 contre des corps solides qui risqueraient d'endommager les pales 14 du module turbine 10.

Dans les exemples de réalisation précédemment décrits, les poutres constituants les montants verticaux 42 ou les moyens de liaison 44 sont représentées avec une section circulaire. Toutefois, il est clair que chaque poutre ou certaines poutres peuvent avoir une section creuse ou pleine, dont le contour correspond à un profil d'aile, par exemple un profil de type NACA, notamment pour minimiser la traînée due au courant tout en augmentant la rigidité en flexion.

La figure 8 est une vue en perspective d'un sixième exemple de réalisation d'un élément de dispositif de maintien selon l'invention dans lequel le module structure 40 comprend quatre montant verticaux 42 disposés, vus de dessus, aux sommets d'un rectangle. Les montants verticaux 42 sont reliés par des moyens de liaison 44 à deux paliers 46 recevant la portion d'arbre d'entraînement 12 des modules turbines 10 de part et d'autres du moyeu 18. Les moyens de liaison 44 sont composés de poutres en treillis qui traversent deux anneaux profilés 100, nommés déflecteurs circulaires fixes 100, dans le sens de courants horizontaux. L'axe des anneaux 100 correspond à l'axe du module turbine 10. Les anneaux remplissent plusieurs fonctions. Ils contribuent à rigidifier le module structure 40. Ils contribuent également à la réduction des tourbillons de bout d'aile et permettent ainsi d'utiliser un module turbine 10 dont les pales ne comprennent pas d'ailettes d'extrémité (winglet). En effet, les anneaux 100 jouent le rôle de déflecteur pour l'écoulement incident amont au niveau des couches arrivant aux extrémités des turbines, cet écoulement étant divisé en deux flux, l'un dirigé vers le module turbine supérieur, l'autre étant dirigé vers le module turbine inférieur par rapport à l'anneau 100, ces deux flux se trouvant affectés d'une composante de vitesse parallèle à l'axe D respectivement ascendante et descendante. Cette réorientation locale s'oppose et annihile les écoulements secondaires le long des pales 14 qui ont tendance à fuir vers les extrémités et à alimenter les tourbillons de bout d'aile. Ce phénomène se produit dans les zones où les pales sont en situation motrice, c'est dire en amont du module structure ou encore en aval de celui-ci.

Les figures 9A et 9B représentent un septième exemple de réalisation d'un élément de dispositif de maintien selon l'invention, dans lequel, par rapport au sixième exemple de réalisation, l'anneau 100 remplit une fonction supplémentaire de guidage de l'extrémité des pales 14 et de lutte contre la flexion des pales. Pour cela une gorge 101 est pratiquée sur les faces supérieure et inférieure de l'anneau 100. Chaque pale motrice 14 comprend à chaque extrémité un patin 102, ou une roue libre, qui est logé dans la gorge 101 de l'anneau 100 adjacent. Comme cela est représenté en figure 9B, la roue libre 102 a la forme d'une portion cylindrique montée libre en rotation sur un arbre 103 fixé à la pale 14. L'axe de roue est orienté selon l'axe de rotation du module turbine 10. La paroi latérale de la roue 102 est susceptible de venir en contact avec les parois de la gorge 101.

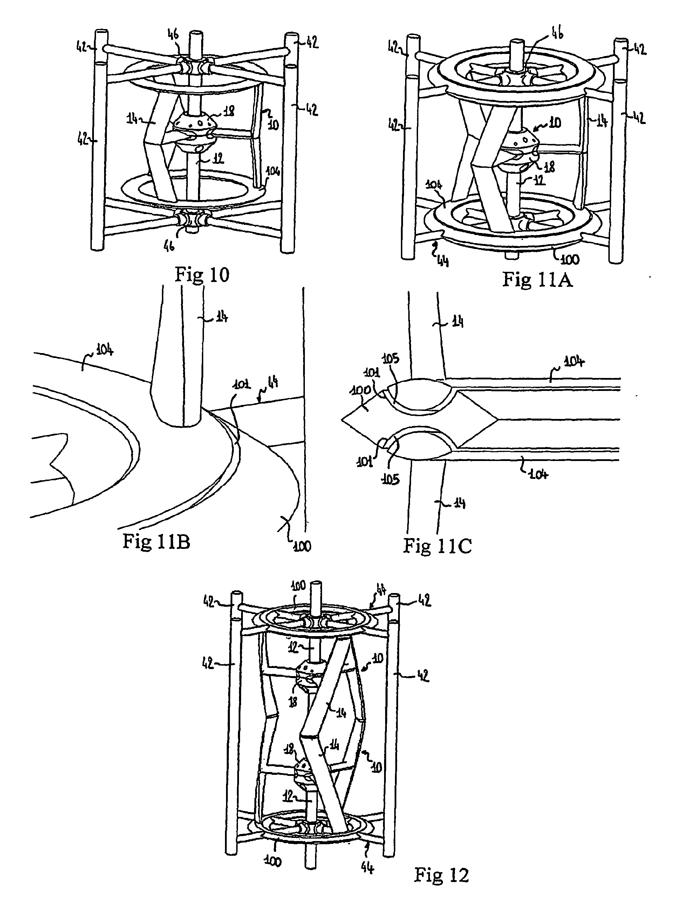

La figure 10 est une vue en perspective d'un huitième exemple de réalisation d'un élément de dispositif de maintien, dans lequel un anneau 104 est relié directement aux extrémités des pales 14. Un tel exemple de réalisation permet de limiter les sollicitations de flexion des pales 14 tout en évitant l'utilisation du système à galet frottant représenté en figure 9B.

Les figures 11A, 11B et 11C représentent un neuvième exemple de réalisation d'un élément de dispositif de maintien selon l'invention, dans lequel, par rapport huitième exemple de réalisation représenté en figure 10, l'anneau tournant 104 est fixé aux extrémités des pales 14 et est logé dans la gorge 101 de l'anneau fixe 100. Une coupe du profil global ainsi obtenu est représentée à la figure 11C. La surface de l'anneau tournant 104 opposée à la gorge 101 vient dans le prolongement de la surface extérieure de l'anneau 100. Un jeu 105 aménagé entre les anneaux 100 et 104 assure un mouvement relatif en rotation sans frottement puisqu'il n'y a pas de contact entre les anneaux 100 et 104.

La figure 12 est une vue en perspective d'un dixième exemple de réalisation d'un élément de dispositif de maintien selon l'invention dans lequel l'élément de dispositif de maintien est associé à un groupe de turbines comprenant, comme cela est représenté en figure 12, deux modules turbine 10 successifs. Toutefois, le groupe de turbines peut comprendre plus de deux modules turbine 10. Les moyens de liaison 44 reliant les montants latéraux 42 à un palier 46 sont prévus de part et d'autre du groupe formé par les deux modules turbine 10. A titre d'exemple, les moyens de liaison 44 ont la même structure que les moyens de liaison du sixième exemple de réalisation d'élément de dispositif de maintien représenté en figure 8. Toutefois, les moyens de liaison 44 peuvent avoir la même structure que les moyens de liaison de n'importe quel exemple de réalisation de l'élément de dispositif de maintien représenté aux figures 3 à 11C. Comme cela est représenté en figure 12, chaque pale 14 d'un module turbine 10 correspond à une aile oblique, les inclinaisons des pales 14 d'un module turbine 10 par rapport à l'axe de rotation du module turbine 10 étant sensiblement identiques. L'inclinaison des pales 14 d'un module turbine 10 est opposée à l'inclinaison des pales 14 du module turbine 10 adjacent et les modules turbine 10 sont disposés de façon que chaque pale 14 d'un module turbine se trouve sensiblement dans le prolongement d'une pale du module turbine adjacent. Chaque pale d'un module turbine forme alors avec une pale de module turbine adjacent une aile en V.

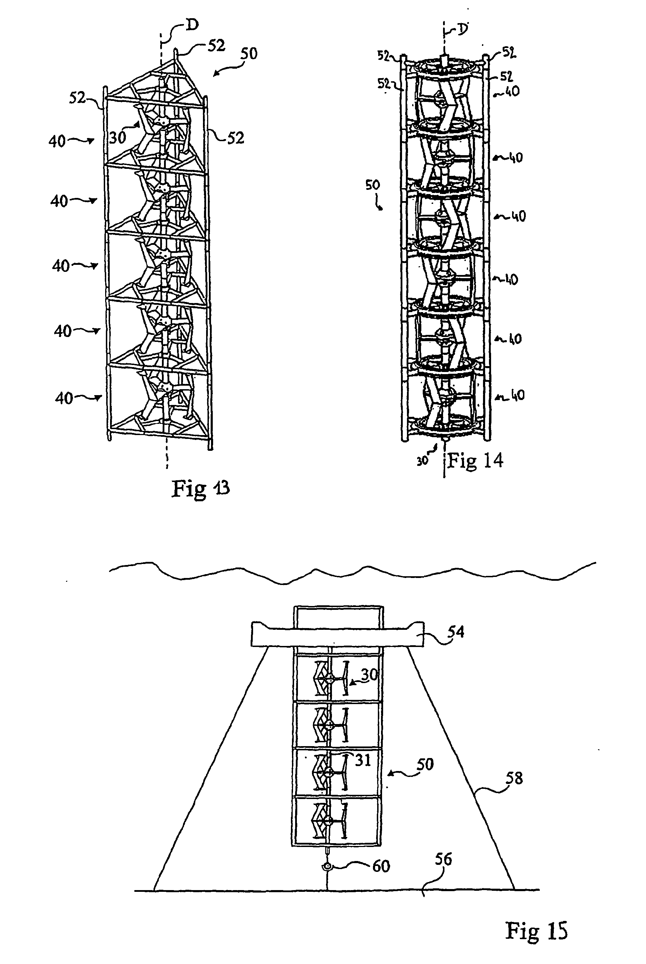

Les figures 13 et 14 représentent deux exemples de réalisation de tour 50 de maintien d'une colonne turbine 30. Chaque tour 50 se compose d'un empilement de modules structure 40 selon l'invention. A titre d'exemple, en figure 13, la tour 50 est constituée de l'empilement de cinq modules structure selon le troisième exemple de réalisation et, en figure 14, la tour 50 est constituée de l'empilement de six modules structure selon le sixième exemple de réalisation. Chaque module structure 40 est relié aux modules structure adjacents. Les modules structure 40 sont donc maintenus de proche en proche jusqu'aux modules structure d'extrémité. En fonctionnement, la colonne turbine 30 tourne autour de l'axe de rotation D tandis que la tour 50 constituée de l'empilement des modules structure 40 est fixe. Les tours 50, représentées aux figures 13 et 14, comprennent respectivement trois et quatre montants verticaux 52 constitués chacun de l'empilement des montants verticaux 42 des modules structure 40. On notera que les moyens de liaison 44 reliant un palier aux montants verticaux sont communs à deux modules structure 40 adjacents. Le module structure situé à l'extrémité supérieure de la tour 50 peut être relié à une barge, à des flotteurs, ou maintenus par des câbles ancrés au sol. Le module structure situé à l'extrémité inférieure de la tour 50 peut être reliée au sol par l'intermédiaire d'ancrages. Les ancrages peuvent être distincts pour chaque tour 50. Toutefois, dans le cas où plusieurs tours 50 sont prévues les unes à côté des autres, un ancrage collectif, du type faux plancher, peut être prévus auquel sont fixés tous les modules structure d'extrémité inférieure des tours 50.

Selon la présente invention, la rigidification de la portion d'arbre d'entraînement 12 de chaque élément turbine 10 est assurée par le module structure 40 associé. De ce fait, le maintien de la colonne turbine 30 n'est pas assuré par la mise en tension de l'arbre d'entraînement 31 par l'application de forces axiales aux extrémités de l'arbre d'entraînement 31 ou aux extrémités d'un câble qui traverserait l'arbre d'entraînement 31 mais par les modules structures 40. Si un câble de guidage traversant l'arbre d'entraînement 31 est néanmoins présent, il peut conserver une fonction de guidage lors d'opérations de montage/démontage des modules turbine 10. Toutefois, pour réaliser une telle fonction de guidage, on peut prévoir, à la place d'un câble traversant l'arbre d'entraînement 31, pour au moins un montant vertical 52 de la tour 50, un câble ou un élément analogue traversant le montant vertical 52. Le montage ou le démontage d'un module structure 40 est alors obtenu en faisant coulisser le module structure 40 le long du câble de guidage.

Pour les opérations de montage et de démontage d'une tour 50 et de la colonne turbine 30 associée, on peut prévoir qu'un module structure 40 est solidaire du module turbine 10 associé. Le montage et le démontage d'une tour 50 et de la colonne turbine 30 associée peut alors se faire par paires module structure - module turbine ou par ensemble de paires module structure - module turbine. Le montage et le démontage sont facilités en prévoyant des éléments de guidage logés dans les montants verticaux des modules structure au lieu d'éléments de guidage logés dans l'arbre d'entraînement 31.

Lors de la première installation d'une tour 50 et de la colonne turbine 30 associée, dans le cas où est utilisé un faux plancher fixé au sol au niveau duquel le module structure d'extrémité inférieure de la tour 50 doit être fixé et une barge flottante ou une plate-forme immergée au niveau de laquelle le module d'extrémité supérieure de la tour 50 doit être fixé, on peut prévoir des systèmes de guidage fixés au préalable au niveau du faux plancher et au niveau de la barge flottante ou de la plate-forme immergée, permettant une mise en place aisée des paires module structure - module turbine. De tels systèmes de guidage peuvent être mis à profit lors des opérations de maintenance ultérieures.

La tour 50 assure dans son ensemble une fonction de rigidification de la colonne turbine 30 associée nécessaire en particulier vis-à-vis de déformations en flexion résultant de la force de traînée exercée sur la colonne turbine 30 par le courant marin ou fluvial. Il n'est donc plus nécessaire d'appliquer des forces axiales aux extrémités de l'arbre d'entraînement 31 de la colonne turbine 30. La tour 50 assure également une fonction de guidage lors de la montée ou de la descente d'une paire module structure - module turbine ou d'un ensemble de paires module structure - module turbine.

Les figures 15 à 18 représentent différents exemples de systèmes de fixation d'une tour 50. Ces différents exemples prévoient tous un système de liaison 60 assurant dans tous les cas une liaison rigide suivant au moins une direction parallèle au sens du courant amont, ceci par l'intermédiaire de l'extrémité inférieure de la tour 50 ou une portion verticale orientée suivant la direction des montants 42. Le système de liaison 60 peut comprendre des liaisons à rotule, des liaisons annulaires, des liaisons du type pivot-glissant ou des encastrements.

La figure 15 représente un exemple de système de fixation d'une tour 50 dans laquelle l'extrémité haute de la tour 50 est fixée à une plate-forme de maintien 54 immergée. La plate-forme 54 est reliée au sol 56 par l'intermédiaire de câbles 58. L'extrémité inférieure de la tour 50 est fixée au sol 56 par l'intermédiaire d'une liaison rotule 60 assurant un maintien rigide suivant un axe de translation parallèle au sens du courant, la liaison rotule 60 étant fixé au sol par l'intermédiaire de systèmes d'ancrages distincts ou collectifs assurant une position fixe de l'extrémité inférieure de la liaison rotule 60. Une couche liquide est ainsi laissée entre l'extrémité supérieure de la tour 50 et la surface. La structure obtenue est alors moins sensible à la houle (notamment à l'oscillation du niveau de la surface et à l'impact des vagues). Il est souhaitable toutefois que la profondeur de la couche liquide surplombant la tour 50 ne soit pas trop élevée (par exemple inférieure à une vingtaine de mètres) pour ne pas rendre trop difficile l'accès à la tour 50 et à la colonne turbine 30. Selon une variante, on peut envisager que les variations de la profondeur d'eau conduisent l'extrémité supérieure de la tour 50 à se situer au-dessus de la surface de l'eau à certaines périodes. Selon une autre variante, on adjoint à la plate-forme immergée 54, une plate-forme supplémentaire, non représentée, totalement émergée et liée à la plate-forme immergée 54. Ceci permet de maintenir hors de l'eau certains systèmes de service et notamment un générateur électrique dont l'immersion prolongée peut poser problème. Un système de transmission du couple d'entraînement fourni par l'arbre d'entraînement 31 de la colonne turbine 30 au générateur électrique peut être prévu au niveau de la plate-forme émergée.

L'exemple de réalisation représentée en figure 15 est défini par rapport à des conditions de fonctionnement et des conditions de maintenance particulières. Selon une variante, l'extrémité inférieure de la tour 50 peut être reliée par encastrement au sol 56 ou à un faux plancher. En outre, les câbles 58, assurant le maintien de l'extrémité supérieure de la tour 50, peuvent être remplacés par des profilés rigides. La présence ou non de la plate-forme immergée 54 est conditionnée par la recherche des conditions les plus favorables pour le comportement d'ensemble de la tour 50 en fonctionnement et pour une ergonomie la plus aisée possible pour les manoeuvres réalisées au cours de la maintenance.

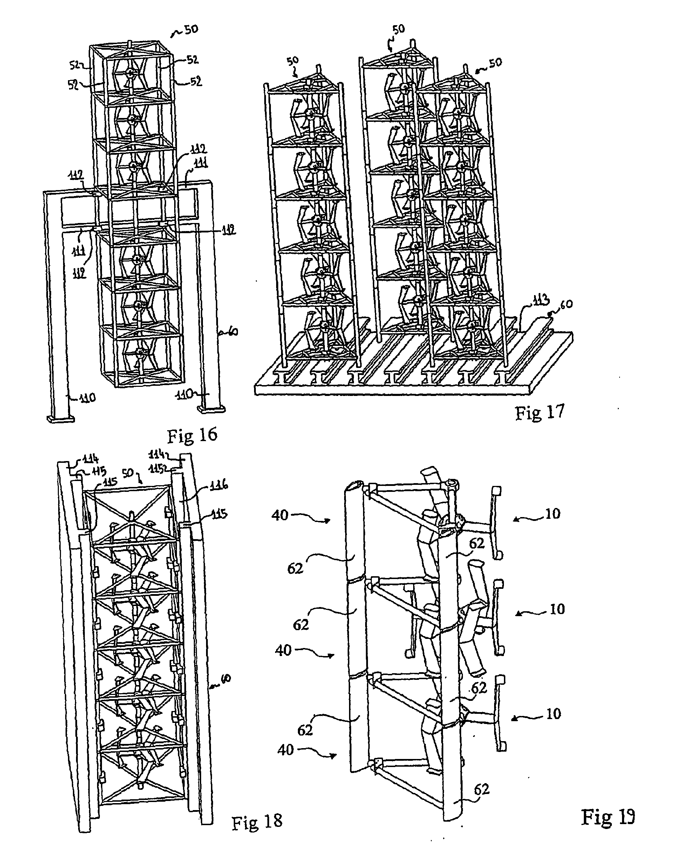

La figure 16 représente un exemple de système de fixation 60 d'une tour 50 comprenant deux pylônes 110, chaque pylône 110 étant fixé à une extrémité inférieure au sol et les extrémités supérieures des pylônes 110 étant reliées entre elles par des barres transversales 111. Les montants 52 de la tour 50 sont fixés aux barres transversales 111 par des éléments de fixation 112. La tour 50 est fixée au système de fixation sensiblement en son milieu.

La figure 17 représente un exemple de système de fixation 60 d'une tour 50 comprenant un ancrage collectif 113, de type faux plancher, auquel peuvent être fixées les extrémités inférieures de plusieurs tours 50. Un tel type d'ancrage 113 est particulièrement avantageux pour l'implantation des groupements de tours 50 sur des fonds irréguliers.

La figure 18 représente un exemple de système de fixation 60 d'une tour 50 comprenant deux murs 114 disposés de part et d'autre d'une tour 50. Chaque mur 114 est fixé à sa base au sol. Sur chaque mur 114 sont répartis deux portions en saillie 115 parallèles qui définissent un canal 116. Chaque canal reçoit une portion de la tour 50 et la maintient ainsi en position.

La figure 19 représente un onzième exemple de réalisation du module structure 40. Selon un tel exemple de réalisation, le module structure 40 a sensiblement la même forme générale que le deuxième exemple de réalisation du module structure selon l'invention. Toutefois, on prévoit un élément de rigidification supplémentaire 62, au niveau de chaque montant vertical 42 du module structure 40, constitué par un manchon qui entoure le montant vertical. Le profil de chaque manchon peut être un profil du type NACA de façon à minimiser la traînée due au courant marin ou fluvial. De tels manchons peuvent également être prévus directement au niveau des portions d'arbre d'entraînement 12 de chaque module turbine 10.

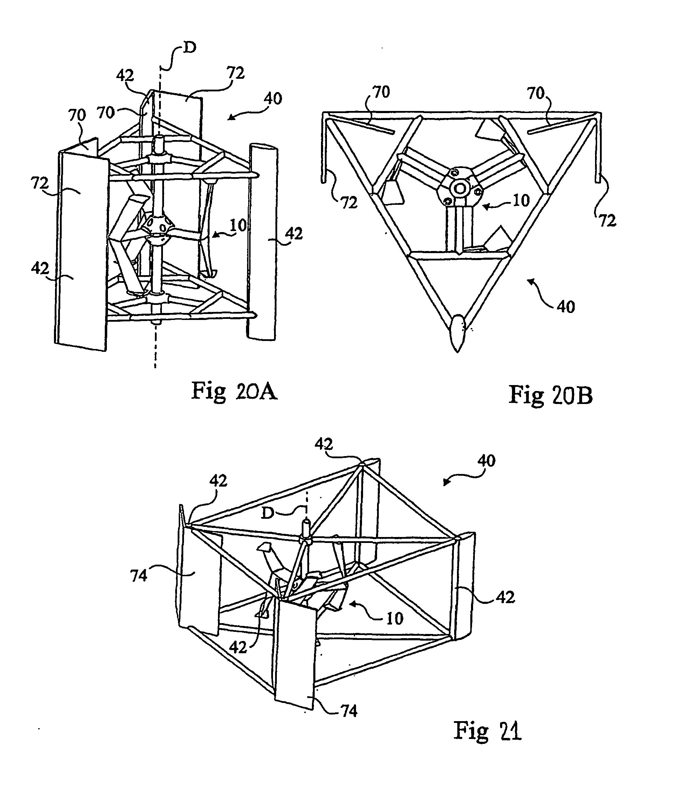

Les figures 20A et 20B représentent un douzième exemple de réalisation de module structure 40 dans lequel la forme générale du module structure correspond sensiblement à la forme du troisième exemple de réalisation du module structure selon l'invention. Selon le douzième exemple de réalisation, les deux montants verticaux 42 du module structure 40, situés en amont du module turbine 10 selon la direction d'écoulement du courant, correspondent à une poutre dont la section, dans un plan perpendiculaire à l'axe D, à la forme d'un "V" dont une branche 70 est orientée vers le module turbine 10 et dont l'autre branche 72 est orientée sensiblement selon une direction légèrement inclinée par rapport à la direction d'écoulement du courant en s'éloignant du module turbine 10. Les branches 70 des montants verticaux en amont permettent de canaliser le courant vers le module turbine 10. Les branches 72 des montants verticaux en amont, que l'on peut avantageusement prolonger par des parois planes parallèles à l'écoulement amont, permettent d'éviter que des courants parasites ne parviennent jusqu'au module turbine 10. Par ailleurs, le montant vertical 42 du module structure 40, situé en aval du module turbine 10 par rapport à la direction d'écoulement du courant, a une section en forme de profil d'aile permettant de limiter la traînée et de stabiliser le module structure 40. Les branches 70 des montants verticaux 42 en amont permettent de diriger le courant au niveau des régions traversées par les pales motrices 14 du module turbine 10 où le module turbine 10 est le plus efficace en fonctionnement. En effet, au cours d'une même rotation, chaque pale motrice 14 du module turbine 10 fournit un couple d'entraînement à la portion d'arbre d'entraînement 12 du module turbine 10 qui varie fortement en fonction de la position angulaire de la pale motrice 14 par rapport à l'axe D et qui peut même être négatif lorsque la pale motrice 14 se trouve au niveau des régions latérales du module turbine 10 par rapport à la direction d'écoulement du courant. Il est donc nécessaire de privilégier la région en aval et surtout la région en amont du module turbine 10 par rapport à la direction d'écoulement du courant. Les branches 70 des montants verticaux 42 en amont ont donc pour rôle de faire converger le flux liquide vers ces régions privilégiées. Par ailleurs, les branches 70 des montants verticaux 42 en amont permettent d'augmenter la vitesse du flux qui atteint les modules turbine 10, ce qui permet d'en augmenter le rendement. Les branches 70 peuvent être également mises à profit pour rigidifier les montants verticaux 42.

La figure 21 représente un treizième exemple de réalisation de module structure 40 dans lequel la forme générale du module structure correspond sensiblement à la forme du quatrième exemple de réalisation du module structure selon l'invention. On prévoit l'ajout au niveau de chaque montant vertical 42, situé en amont du module turbine 10 par rapport à la direction d'écoulement du courant marin ou fluvial, d'un dispositif de conditionnement 74 dont la section, dans un plan perpendiculaire à l'axe D, à la forme d'un "V". Dans le présent exemple de réalisation, les dispositifs de conditionnement 74 sont fixés aux montants verticaux 42 en amont tandis que dans l'exemple de réalisation précédemment décrit, ce sont les montants verticaux amonts qui assurent directement la fonction de conditionnement du courant.

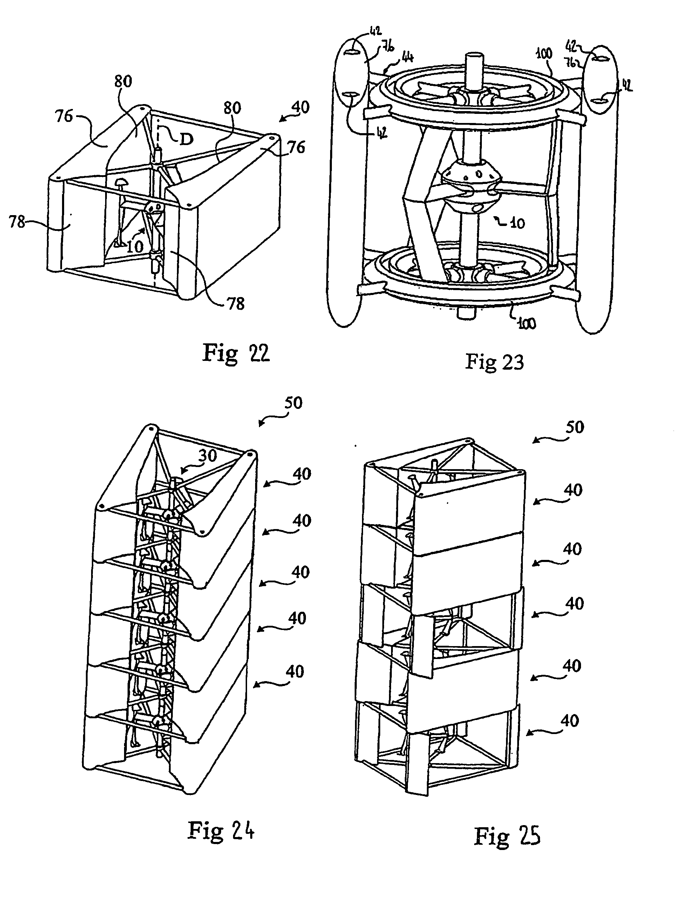

La figure 22 représente un quatorzième exemple de réalisation de module structure 40 dans lequel la forme générale du module structure correspond sensiblement à la forme du quatrième exemple de réalisation du module structure selon l'invention. Entre chaque montant vertical en amont du module turbine 10 selon la direction d'écoulement du courant marin ou fluvial et le montant vertical en aval situé dans le prolongement du montant vertical amont selon la direction d'écoulement du courant, on prévoit un dispositif de conditionnement 76 sous la forme d'une enceinte creuse ou pleine. Chaque dispositif de conditionnement 76 comprend, du côté du module turbine 10, une paroi latérale de convergence 78 qui débute au niveau du montant vertical en amont et qui se prolonge par une paroi latérale de divergence 80 jusqu'au montant vertical en aval. Un tel dispositif de conditionnement 76 peut ménager une section d'entrée pour l'écoulement ayant une aire égale ou différente de l'aire de la section de sortie. Selon une variante, la paroi latérale de divergence 80 a son bord de fuite prévu entre le montant vertical en amont et le montant vertical en aval associé. Lorsque les deux dispositifs de conditionnement 76 sont mis en place au niveau du module structure 40, les parois latérales de convergence 78 confinent fortement l'écoulement vers le module turbine 10 selon un principe analogue à ce qui a été décrit précédemment en relation aux figures 20A, 20B et 21. Les parois latérales de divergence 80 permettent de laisser s'épanouir l'écoulement en sortie du module turbine 10 pour compenser la chute de pression entre l'amont et l'aval induite par le module turbine 10. Chaque dispositif de conditionnement 76 peut être rempli, s'il est creux, au moins partiellement d'eau. Selon une variante, on prévoit un système actionnable à distance permettant, en fonctionnement, le remplissage, au moins partiel, du dispositif de conditionnement 76 avec de l'eau environnante et/ou le vidage, au moins partiel, du dispositif de conditionnement 76.

La figure 23 représente une variante du dispositif de conditionnement 76, décrit pour le septième exemple de réalisation d'élément de dispositif de maintien. La particularité du dispositif de conditionnement 76 est une symétrie axiale de la section du dispositif de conditionnement. Cette symétrie de section a pour avantage de permettre un conditionnement hydrodynamique performant pour un courant fluide amont susceptible de varier de sens au cours du temps, comme cela est le cas dans un contexte de courant marin par exemple.

La figure 24 représente un exemple de tour 50 avec la colonne turbine 30 associée, constituée de modules structure 40 correspondant au module structure de la figure 22.

La figure 25 représente un exemple de tour 50 avec la colonne turbine 30 associée, constituée d'un empilement de modules structure 40 correspondant au module structure de la figure 21 et au module structure de la figure 22.

Les dispositifs de conditionnement 76 permettent de protéger une tour 50 de collisions avec d'autres tours adjacentes, notamment lors d'opérations de montage ou de démontage. En outre, pour chaque module structure 40 comprenant deux dispositifs de conditionnement 76, les dispositifs de conditionnement 76 peuvent imposer à la tour 50 une force globale axiale le long de l'axe D, orientée vers le bas ou vers le haut selon le niveau de remplissage des dispositifs de conditionnement 76. A titre d'exemple, dans le cas où le niveau d'eau contenu dans les dispositifs de conditionnement 76 peut être modifié alors que la tour 50 est immergée dans le courant marin ou fluvial, les dispositifs de conditionnement 76 peuvent être vidés lorsque l'on souhaite réaliser une opération de maintenance pour faciliter le démontage de la tour 50. Au contraire, les dispositifs de conditionnement 76 peuvent être remplis d'eau lors d'une opération de montage pour faciliter la mise en place des modules structure. Lors de l'opération de transport de la tour 50 sur le lieu d'installation ou lors du rapatriement de la tour 50 pour une maintenance à terre, les dispositifs de conditionnement 76 peuvent être vidés de sorte que l'ensemble de la tour flotte à la surface, l'axe D ayant lors de ces opérations de transport de la tour 50 une direction horizontale, l'ensemble de la tour 50 étant par exemple tractée par un navire. Les avantages des dispositifs de conditionnement 76 sont importants tant pour le transport, l'installation, la maintenance et la désinstallation des tours 50.

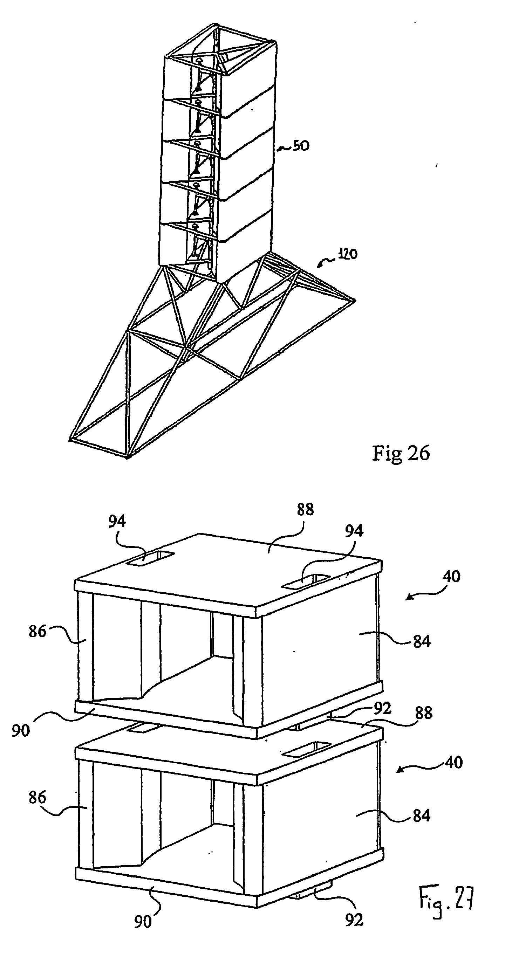

La figure 26 représente une variante de la tour 50 de la figure 24 dans laquelle on prévoit à l'extrémité inférieure de la tour 50 une structure d'assise 115, par exemple de forme pyramidale, constituée de poutres disposées en treillis. La structure d'assise 115 offre une meilleure assise de la tour 50 sur le sol ou sur un faux plancher, par augmentation de la surface de contact.

La figure 27 représente un quinzième exemple de réalisation d'un module structure 40 dans lequel le module structure 40 est composé de deux enceintes 84, 86 reliées par une plaque supérieure 88 et une plaque inférieure 90 comportant chacune un palier, non représenté, recevant la portion d'arbre d'entraînement d'un module turbine, non représenté. Chaque enceinte 84, 86 joue directement le rôle d'un montant 42 tel que décrit dans les précédents exemples de réalisation. Les efforts induits par l'immersion du module turbine 10 dans un courant marin ou fluvial, notamment les efforts de flexion induits par les efforts de traînée appliqués au module turbine 10, sont supportés par les enceintes 84, 86. Par ailleurs, les enceintes 84, 86 peuvent jouer le même rôle que les dispositifs de conditionnement 76 du neuvième exemple de réalisation de l'invention. On peut prévoir au niveau de la plaque inférieure 90 des ergots 92 et au niveau de la plaque supérieure 88 des évidements 94, les ergots 92 de la plaque inférieure 90 d'un module structure 40 étant adaptés à coopérer avec les évidements 94 de la plaque supérieure 88 du module structure 40 adjacent de façon à améliorer la tenue mécanique aux efforts de la tour 50 en cours de fonctionnement tout en permettant une mise en position des modules structure 40 les uns par rapport aux autres lors de l'assemblage de la tour 50. Des câbles peuvent traverser chaque enceinte 84, 86, par exemple au niveau des ergots 92 et des évidements 94 de façon à faciliter le montage et le démontage de la tour. Des systèmes de fixation, non représentés, peuvent être ajoutés afin d'assurer la cohésion selon la direction de l'axe de rotation D entre deux modules structure 40 adjacents. Selon une variante, le module structure 40 peut ne comprendre qu'une seule plaque (la plaque supérieure ou inférieure).

Les modules structure selon les exemples de réalisation décrits en relation aux figures 20A à 27 comportent des dispositifs de conditionnement 74, 76 du courant marin ou fluvial qui sont définis par rapport à une orientation bien définie de ce courant. Pour conserver l'avantage propre à une turbomachine hydraulique à axe vertical qui est d'être insensible à la direction du courant, on peut permettre une rotation de la tour 50 par rapport à l'axe D éventuellement asservie à la puissance récupérée à partir de la plate-forme supérieure, immergée ou émergée, la liaison entre le module d'extrémité inférieure de la tour 50 au faux plancher ou au sol autorisant une rotation de la tour 50. On peut alors prévoir un moyen pour forcer l'orientation de la tour 50 selon la direction du courant ou prévoir que la tour 50 s'oriente automatiquement selon la direction du courant.

Selon une variante des exemples de réalisation précédemment décrits, un même module structure peut être associé à un empilement de plusieurs modules turbine. Dans ce cas, le montant vertical ou les montants verticaux du module structure sont reliés à un premier palier recevant la portion d'arbre d'entraînement du module turbine situé à l'extrémité supérieure de l'empilement de modules turbine et à un second palier recevant la portion d'arbre d'entraînement du module turbine situé à l'extrémité inférieure de l'empilement de modules turbine. Un tel module structure peut être réalisé selon l'un quelconque des exemples de réalisation précédemment décrits.

Bien entendu, la présente invention est susceptible de diverses variantes et modifications qui apparaîtront à l'homme de l'art. En particulier, une même colonne turbine peut comporter des modules turbine de structure différente. En outre, pour les exemples de réalisation décrits en relation aux figures 3 à 12, les montants 42 peuvent avoir des formes plus complexes que celles représentées. En particulier, les montants 42 de chaque module structure peuvent correspondre à des poutres disposées en zigzag, en croix, etc. En outre, la tour 50 peut avoir une forme générale de pyramide tronquée, le module structure d'extrémité inférieure de la tour ayant des dimensions plus importantes que le module d'extrémité supérieure. Les montants de chaque module structure peuvent alors être disposés, dans un plan contenant l'axe de rotation D, de façon inclinée par rapport à l'axe D. De plus, bien que la présente invention ait été décrite pour des tours isolées, la présente invention s'applique également à une turbomachine constituée de plusieurs tours adjacentes reliées les unes aux autres, les modules structure de tours adjacentes pouvant avoir des éléments communs. En outre, bien que la présente invention ait été décrite pour une turbomachine hydraulique utilisée pour la fourniture d'électricité, elle s'applique également à des turbomachines pour lesquelles l'énergie mécanique fournie par l'arbre d'entraînement de la machine peut être utilisée à d'autres fins, par exemple pour un système de pompage, un système de dessalement de l'eau, etc.

## Revendications

1. Dispositif (50) de maintien d'une turbomachine hydraulique (30), la turbomachine comprenant un arbre d'entraînement (31) le long duquel sont réparties des turbines (10) destinées à entraîner l'arbre d'entraînement en rotation lorsqu'elles sont immergées dans un liquide en mouvement, chaque turbine comprenant des pales motrices (14) réparties autour de l'arbre d'entraînement, le dispositif comprenant :
au moins trois montants (52) s'étendant sur au moins plus de la moitié de la longueur de l'arbre d'entraînement, chaque montant étant constitué de l'empilement d'au moins deux portions de montant (42), chaque portion de montant étant associée à une turbine (10) ou à un ensemble de turbines adjacentes, au moins deux montants étant destinés à être disposés en amont de la turbomachine (30) selon la direction d'écoulement du liquide et de part et d'autre d'un plan contenant l'axe (D) de l'arbre d'entraînement (31) et la direction d'écoulement du liquide ;
un premier moyen de liaison (44) fixé à l'une des portions de montant et à un palier (46) recevant l'arbre d'entraînement et disposé entre deux turbines adjacentes ; et
un second moyen de liaison (60) reliant au moins l'un des montants au sol par une liaison (56) empêchant la translation dudit montant par rapport au sol au moins selon un axe parallèle à la direction du mouvement du liquide,
ledit dispositif étant **caractérisé en ce qu'**il comprend au niveau de chaque portion de montant (42) parmi deux portions de montant desdits deux montants associées à une même turbine ou à un même ensemble de turbines adjacentes, un dispositif de conditionnement (70, 74, 76) fixé à ladite portion de montant ou intégré à ladite portion de montant et adapté à diriger l'écoulement du liquide vers la turbomachine (30).

2. Dispositif selon la revendication 1, dans lequel le premier moyen de liaison (44) s'étend selon une direction générale perpendiculaire à l'axe (D) de l'arbre d'entraînement (31).

3. Dispositif selon la revendication 1, comprenant pour chaque paire de turbines (40) adjacentes, un premier moyen de liaison (44) fixé à une portion de montant (42), associée à au moins l'une des turbines de la paire de turbines adjacentes, et à un palier (46) recevant l'arbre d'entraînement (31) entre les turbines de la paire de turbines adjacentes.

4. Dispositif selon la revendication 1, comprenant au moins deux montants (52) orientés selon l'axe (D) de l'arbre d'entraînement (31) et constitué chacun de l'empilement d'au moins deux portions de montant (42), chaque portion de montant étant associée à une turbine (10) ou à un ensemble de turbines adjacentes, le moyen de liaison (44) étant fixé à des portions de montant desdits deux montants, associées à la même turbine ou au même ensemble de turbines adjacentes, et audit palier (46).

5. Dispositif selon la revendication 1, dans lequel au moins une portion de montant (42) est entourée d'un manchon de rigidification (62) ayant, dans un plan perpendiculaire à l'axe (D) de l'arbre d'entraînement (31), un profil d'aile pour limiter la traînée.

6. Dispositif selon la revendication 1, comprenant un moyen de guidage traversant chaque montant (52), chaque portion de montant (42) étant adaptée à coulisser le long du moyen de guidage lors d'une opération de montage ou de démontage du dispositif.

7. Dispositif selon la revendication 1, comprenant une grille fixée entre deux portions de montant desdits deux montants associées à une même turbine ou à un même ensemble de turbines adjacentes.

8. Dispositif selon la revendication 1, comprenant une plate-forme (54) à laquelle est fixée l'extrémité supérieure de chaque montant (52) selon la direction de l'axe (D) de l'arbre d'entraînement (31).

9. Dispositif selon la revendication 8, dans lequel la plate-forme (54) est immergée dans le liquide.

10. Dispositif selon la revendication 1, comprenant au moins un réservoir (76) creux, fixé à au moins une portion de montant (42), ledit réservoir étant vide ou rempli au moins en partie de liquide.

11. Dispositif selon la revendication 10, comprenant un moyen actionnable à distance adapté, lorsque le réservoir (76) est immergé dans le liquide, à remplir au moins partiellement le réservoir avec du liquide et/ou à vider au moins partiellement le réservoir.

12. Dispositif selon la revendication 1, comprenant un moyen de modification de la position des montants (52) par rapport à la turbomachine (30) en fonction de la direction d'écoulement du liquide.

13. Dispositif selon la revendication 1, comprenant un système de variation de vitesse entre une turbine (10), ou un ensemble de turbines, et l'arbre d'entraînement (12) adapté à modifier le rapport entre la vitesse de rotation de la turbine, ou de l'ensemble de turbines, et la vitesse de rotation de l'arbre d'entraînement en fonction de l'écoulement du liquide qui atteint la turbine ou l'ensemble de turbines.

14. Dispositif selon la revendication 1, dans lequel l'arbre d'entraînement (12) entraîne un arbre d'entrée d'un système de conversion d'énergie, le dispositif comprenant un système de variation de vitesse adapté à modifier le rapport entre la vitesse de rotation de l'arbre d'entraînement et la vitesse de rotation de l'arbre d'entrée en fonction de l'écoulement du liquide qui atteint la turbomachine (30).

15. Dispositif selon la revendication 1, dans lequel l'arbre d'entraînement (12) entraîne un arbre d'entrée d'un système de conversion d'énergie, le système de conversion d'énergie étant adapté à fournir un couple de freinage, qui s'oppose à la rotation de l'arbre d'entraînement, d'amplitude déterminée en fonction de l'écoulement du liquide qui atteint la turbomachine (30).

16. Dispositif selon la revendication 1, comprenant au moins un élément de renfort (100) de forme annulaire fixé au premier moyen de liaison (44) au niveau de l'extrémité des pales (14) de l'une des turbines (10).

17. Dispositif selon la revendication 16, dans lequel l'élément de renfort (100) comprend une rainure (101) annulaire et dans lequel au moins une pale (14) d'une turbine (10) comprend un élément (102) adapté à coulisser dans ladite rainure.

18. Dispositif selon la revendication 1, dans lequel les extrémités des pales (14) d'au moins l'une des turbines (10) sont reliées entre elles par un élément de renfort (104) fixe par rapport à la turbine.

19. Dispositif selon la revendication 16, dans lequel l'élément de renfort (100) comprend une rainure (101) annulaire et dans lequel les extrémités des pales (14) d'au moins l'une des turbines (10) sont reliées entre elles par un élément de renfort (104) supplémentaire de forme annulaire fixe par rapport à la turbine et disposé au niveau de la rainure.

## Claims

1. A device (50) for holding a hydraulic turbomachine (30) in position, the turbomachine comprising a drive shaft (31) along which are distributed turbines (10) designed to rotate the drive shaft when they are immersed in a moving liquid, each turbine comprising drive blades (14) distributed around the drive shaft, the device comprising:
at least three posts (52) extending along at least more than half of the length of the drive shaft, each post being formed of the stacking of at least two post portions (42), each post portion being associated with a turbine (10) or with an assembly of adjacent turbines, at least two posts being designed to be arranged upstream of the turbomachine (30) along the liquid flow direction and on either side of a plane containing the axis (D) of the drive shaft (31) and the liquid flow direction;
first linking means (44) attached to one of the post portions and to a bearing (46) receiving the drive shaft and arranged between two adjacent turbines; and
second linking means (60) connecting at least one of the posts to the ground by a rigid connection (56) with respect to the ground along at least one axis parallel to the liquid motion direction,
said device being **characterized in that** it comprises at the level of each post portion (42) among two post portions of said two posts, associated with a same turbine or with a same assembly of adjacent turbines, a conditioning device (70, 74, 76) attached to said post portion or integrated with said post portion and capable of directing the liquid flow towards the turbomachine (30).

2. The device of claim 1, in which the first linking means (44) extend along a general direction perpendicular to the axis (D) of the drive shaft (31).

3. The device of claim 1, comprising, for each pair of adjacent turbines (40), first linking means (44) attached to a post portion (42), associated with at least one of the turbines of the pair of adjacent turbines, and to a bearing (46) receiving the drive shaft (31) between the turbines of the pair of adjacent turbines.

4. The device of claim 1, comprising at least two posts (52) oriented along the axis (D) of the drive shaft (31), each formed of the stacking of at least two post portions (42), each post portion being associated with a turbine (10) or with an assembly of adjacent turbines, the linking means (44) being attached to post portions of said two posts, associated with the same turbine or with the same assembly of adjacent turbines, and to said bearing (46).

5. The device of claim 1, in which at least one post portion (42) is surrounded with a stiffening sleeve (62) having, in a plane perpendicular to the axis (D) of the drive shaft (31), a wing profile to limit the drag.

6. The device of claim 1, comprising guiding means running through each post (52), each post portion (42) being capable of sliding along the guiding means in an operation of assembly or disassembly of the device.

7. The device of claim 1, comprising a grating attached between two post portions of said two posts associated with a same turbine or with a same assembly of adjacent turbines.

8. The device of claim 1, comprising a platform (54) to which is attached the upper end of each post (52) along the direction of the axis (D) of the drive shaft (31).

9. The device of claim 8, in which the platform (54) is immersed in the liquid.

10. The device of claim 1, comprising at least one hollow tank (76), attached to at least one post portion (42), said tank being empty or at least partly filled with liquid.

11. The device of claim 10, comprising remotely-operable means capable, when the tank (76) is immersed in the liquid, of at least partially filling the tank with liquid and/or of at least partially emptying the tank.

12. The device of claim 1, comprising means for modifying the position of the posts (52) with respect to the turbomachine (30) according to the liquid flow direction.

13. The device of claim 1, comprising a speed variation system between a turbine (10), or a turbine assembly, and the drive shaft (12) capable of modifying the ratio between the rotation speed of the turbine or of the turbine assembly and the rotation speed of the drive shaft according to the liquid flow which reaches the turbine or the turbine assembly.

14. The device of claim 1, in which the drive shaft (12) drives an input shaft of an energy conversion system, the device comprising a speed variation system capable of modifying the ratio between the rotation speed of the drive shaft and the rotation speed of the input shaft according to the liquid flow which reaches the turbomachine (30).

15. The device of claim 1, in which the drive shaft (12) drives an input shaft of an energy conversion system, the energy conversion system being capable of providing a braking torque, which opposes to the rotation of the drive shaft, of an amplitude determined according to the liquid flow which reaches the turbomachine (30).

16. The device of claim 1, comprising at least one ring-shaped stiffening element (100) attached to the first linking means (44) at the tips of the blades (14) of one of the turbines (10).

17. The device of claim 16, in which the stiffening element (100) comprises a ring-shaped groove (101) and in which at least one blade (14) of a turbine (10) comprises an element (102) capable of sliding in said groove.

18. The device of claim 1, in which the ends of the blades (14) of at least one of the turbines (10) are interconnected by a stiffening element (104) which is fixed with respect to the turbine.

19. The device of claim 16, in which the stiffening element (100) comprises a ring-shaped groove (101) and in which the ends of the blades (14) of at least one of the turbines (10) are interconnected by an additional ring-shaped stiffening element (104) which is fixed with respect to the turbine and arranged at the groove level.

## Patentansprüche

1. Vorrichtung (50) zum Halten einer Hydraulikturbomaschine (30) an der Position, wobei die Turbomaschine eine Antriebswelle (31) aufweist, entlang der Turbinen (10) verteilt sind, die ausgelegt sind, um die Antriebswelle zu drehen, wenn sie in einer sich bewegenden Flüssigkeit eingetaucht sind, wobei jede Turbine Antriebsschaufeln (14) aufweist, die um die Antriebswelle herum verteilt sind, wobei die Vorrichtung Folgendes aufweist:
zumindest drei Ständer (52), die sich entlang zumindest mehr als der Hälfte der Länge der Antriebswelle erstrecken, wobei jeder Ständer durch Stapeln von mindestens zwei Ständerteilen (42) gebildet wird, wobei jeder Ständerteil mit einer Turbine (10) oder mit einer Anordnung von benachbarten Turbinen assoziiert ist, wobei zumindest zwei Ständer so ausgelegt sind, dass sie stromaufwärts der Turbomaschine (30) entlang der Flüssigkeitsflussrichtung und auf jeder Seite einer Ebene angeordnet sind, welche die Achse (D) der Antriebswelle (31) und die Flüssigkeitsflussrichtung enthält;
erste Verbindungsmittel (44), die an einem der Ständerteile und an einem Lager (46) angebracht sind, welches die Antriebswelle aufnimmt und zwischen zwei benachbarten Turbinen angeordnet ist; und
zweite Verbindungsmittel (60), die zumindest einen der Ständer mit dem Boden durch eine starre Verbindung (56) bezüglich des Bodens entlang mindestens einer Achse parallel zur Flüssigkeitsbewegungsrichtung verbinden,
wobei die Vorrichtung **dadurch gekennzeichnet ist, dass** sie auf dem Niveau von jedem Ständerteil (42) von zwei Ständerteilen der zwei Ständer, die mit einer gleichen Turbine oder mit einer gleichen Anordnung von benachbarten Turbinen assoziiert sind, eine Konditionierungsvorrichtung (70, 74, 76) aufweist, die an dem Ständerteil angebracht ist oder mit dem Ständerteil integriert ist und den Flüssigkeitsfluss zur Turbomaschine (30) hinleiten kann.

2. Vorrichtung nach Anspruch 1, wobei die ersten Verbindungsmittel (44) sich entlang einer allgemeinen Richtung senkrecht zur Achse (D) der Antriebswelle (31) erstrecken.

3. Vorrichtung nach Anspruch 1, die für jedes Paar von benachbarten Turbomaschinen (40) erste Verbindungsmittel (44) aufweist, die an einem Ständerteil (42) angebracht sind, der mit mindestens einer der Turbinen des Paares von benachbarten Turbinen assoziiert ist, und mit einem Lager (46), welches die Antriebswelle (31) zwischen den Turbinen des Paares von benachbarten Turbinen aufnimmt.

4. Vorrichtung nach Anspruch 1, die mindestens zwei Ständer (52) aufweist, die entlang der Achse (D) der Antriebswelle (31) orientiert sind, wobei sie jeweils durch das Stapeln von mindestens zwei benachbarten Ständerteilen (42) gebildet werden, wobei jeder Ständerteil mit einer Turbine (10) oder mit einer Anordnung von benachbarten Turbinen assoziiert ist, wobei die Verbindungsmittel (44) an Ständerteilen der zwei Ständer angebracht sind, die mit der gleichen Turbine oder mit der gleichen Anordnung von Turbinen assoziiert sind, und zwei Lager (46).

5. Vorrichtung nach Anspruch 1, wobei zumindest ein Ständerteil (42) mit einer Versteifungshülse (62) umgeben ist, die in einer Ebene senkrecht zur Achse (D) der Antriebswelle (31) ein Flügelprofil hat, um den Widerstand zu begrenzen.

6. Vorrichtung nach Anspruch 1, die Führungsmittel aufweist, die durch jeden Ständer (52) verlaufen, wobei jeder Ständerteil (42) entlang den Führungsmitteln bei einem Montage- oder Demontagevorgang der Vorrichtung gleiten kann.

7. Vorrichtung nach Anspruch 1, die ein Gitter aufweist, welches zwischen zwei benachbarten Ständerteilen der zwei Ständer angebracht ist, die mit der gleichen Turbine oder mit der gleichen Anordnung von benachbarten Turbinen assoziiert sind.

8. Vorrichtung nach Anspruch 1, die eine Plattform (54) aufweist, an der das obere Ende von jedem Ständer (52) entlang der Richtung der Achse (D) der Antriebswelle (31) angebracht ist.

9. Vorrichtung nach Anspruch 8, wobei die Plattform (54) in der Flüssigkeit untergetaucht ist.

10. Vorrichtung nach Anspruch 1, die zumindest einen hohlen Tank (76) aufweist, der an mindestens einem Ständerteil (42) angebracht ist, wobei der Tank leer ist oder zumindest teilweise mit Flüssigkeit gefüllt ist.

11. Vorrichtung nach Anspruch 10, die von der Ferne betätigbare Mittel aufweist, die fähig sind, wenn der Tank (76) in der Flüssigkeit untergetaucht ist, den Tank zumindest teilweise mit Flüssigkeit zu füllen und/oder den Tank zumindest teilweise zu leeren.

12. Vorrichtung nach Anspruch 1, die Mittel aufweist, um die Position der Ständer (52) bezüglich der Turbomaschine (30) entsprechend der Strömungsmittelflussrichtung zu modifizieren.

13. Vorrichtung nach Anspruch 1, die ein Drehzahlveränderungssystem zwischen einer Turbine (10) oder einer Turbinenanordnung und der Antriebswelle (12) aufweist, welches das Verhältnis zwischen der Drehzahl der Turbine oder der Turbinenanordnung und der Drehzahl der Antriebswelle gemäß dem Flüssigkeitsfluss modifizieren kann, der die Turbine oder die Turbinenanordnung erreicht.

14. Vorrichtung nach Anspruch 1, bei der die Antriebswelle (12) die Eingangswelle eines Energieumwandlungssystems antreibt, wobei die Vorrichtung ein Drehzahlveränderungssystem aufweist, welches das Verhältnis zwischen der Drehzahl der Antriebswelle und der Drehzahl der Eingangswelle gemäß dem Flüssigkeitsfluss modifizieren kann, der die Turbomaschine (30) erreicht.

15. Vorrichtung nach Anspruch 1, wobei die Antriebswelle (12) eine Eingangswelle eines Energieumwandlungssystems antreibt, wobei das Energieumwandlungssystem ein Bremsdrehmoment liefern kann, welches der Drehung der Eingangswelle entgegenwirkt, und zwar mit einer Amplitude, die gemäß dem Strömungsmittelfluss bestimmt wird, der die Turbomaschine (30) erreicht.

16. Vorrichtung nach Anspruch 1, die zumindest ein ringförmiges Versteifungselement (100) aufweist, welches an den ersten Verbindungsmitteln (44) an den Spitzen der Schaufeln (14) von einer der Turbinen (10) angebracht ist.

17. Vorrichtung nach Anspruch 16, bei der das Versteifungselement (100) eine ringförmige Nut (101) aufweist, und bei der zumindest eine Schaufel (14) einer Turbine (10) ein Element (102) aufweist, welches in der Nut gleiten kann.

18. Vorrichtung nach Anspruch 1, bei der die Enden der Schaufeln (14) der mindestens einen der Turbinen (10) durch ein Versteifungselement (104) verbunden sind, welches bezüglich der Turbine festgelegt ist.

19. Vorrichtung nach Anspruch 16, wobei das Versteifungselement (100) eine ringförmige Nut (101) aufweist, und wobei die Enden der Schaufeln (14) von mindestens einer der Turbinen (10) durch ein zusätzliches ringförmiges Versteifungselement (104) verbunden sind, welches bezüglich der Turbine festgelegt ist und auf dem Niveau der Nut angeordnet ist.
